# EUROPÄISCHE PATENTSCHRIFT

(11) **EP 0 519 933 B1**
(45) Veröffentlichungstag und Bekanntmachung des Hinweises auf die Patenterteilung: **06.10.1993**
(21) Anmeldenummer: 91903998.2
(22) Anmeldetag: 27.02.1991
(51) Int. Cl.: G01N 27/409

(54) **SAUERSTOFFSENSOR ZUR BESTIMMUNG DES LAMBDA-WERTES**
OXYGEN SENSOR FOR LAMBDA VALUE DETERMINATION
CAPTEUR D'OXYGENE POUR LA DETERMINATION DE LA VALEUR DE LAMBDA

(30) Priorität: 13.03.1990 DE 4007856
(43) Veröffentlichungstag der Anmeldung: 30.12.1992
(73) Patentinhaber: ROBERT BOSCH GMBH, 70442 Stuttgart (DE)
(72) Erfinder: DIETZ, Hermann, D-7016 Gerlingen (DE); BEYER, Barbara, D-7016 Gerlingen (DE); GRUENWALD, Werner, D-7016 Gerlingen (DE); DE LA PRIETA, Claudio, D-7000 Stuttgart 80 (DE)
(86) Internationale Anmeldenummer: DE9100166
(87) Internationale Veröffentlichungsnummer: WO9114174

(56) Entgegenhaltungen:
- EP-A- 0 188 900
- DE-C- 3 728 618
- Solid State Ionics, Band 40/41, 1990, Elsevier Science Publishers B.V. (North Holland), B.Y. Liaw, W. Weppner "Low temperature limiting-current oxygen sensors using tetragonal zirconia as solid electrolytes", Seiten 428-432, siehe Fig. 1; Seite 430, 4. Absatz - Seite 432, 1. Absatz

## Beschreibung

### Stand der Technik

Die Erfindung geht aus von einem Sensorelement für eine Sauerstoffgrenzstromsonde nach der Gattung des Hauptanspruchs (siehe z.B. Solid State Ionics, Band 40/41, 1990, Elsevier Science Publishers B.V. (North Holland); B.Y. Liaw et al.: "Low temperature Limiting-current oxygen sensor using tetragonal zirconia as solid electrolytes", Seiten 428-432). Bei derartigen Sensorelementen, die nach dem Diffusionsgrenzstromprinzip arbeiten, wird der Diffusionsgrenzstrom bei einer konstanten, an den beiden Elektroden des Sensorelementes anliegenden Spannung gemessen. Dieser Strom ist bei einem sauerstoffhaltigen Meßgas linear vom Sauerstoffpartialdruck solange abhängig, wie die Diffusion des Gases zur Pumpelektrode die Geschwindigkeit der ablaufenden Reaktion bestimmt. Es ist bekannt, derartige Sensorelemente in der Weise aufzubauen, daß sowohl Anode als auch Kathode dem zu messenden Gas ausgesetzt sind, wobei die Kathode eine Diffusionsbarriere aufweist, um ein Arbeiten im Diffusionsgrenzstrombereich zu gewährleisten.

Die bekannten Sauerstoffgrenzstromsonden dienen in der Regel zur Bestimmung des λ-Wertes von Abgasgemischen aus Verbrennungskraftmaschinen, der das Verhältnis "Gesamtsauerstoff/zur vollständigen Verbrennung des Kraftstoffs benötigten Sauerstoff" des in einem Zylinder verbrennenden Luft-Kraftstoffgemisches bezeichnet.

Aufgrund einer vereinfachten und kostengünstigen Herstellungsweise hat sich in der Praxis in den letzten Jahren die Herstellung von in Keramikfolien- und in Siebdrucktechnik herstellbaren Sensorelementen durchgesetzt.

In einfacher und rationeller Weise lassen sich planare Sensorelemente ausgehend von plättchen- oder folienförmigen sauerstoffleitenden Festelektrolyten, z. B. aus stabilisiertem Zirkondioxid, herstellen, die beidseitig mit Elektroden und Zuleitungen beschichtet sind, und zwar mit einer inneren Pumpelektrode auf der einen und einer äußeren Pumpelektrode auf der anderen Seite. Die innere Pumpelektrode befindet sich dabei in vorteilhafter Weise am Ende eines Diffusionsspaltes oder Diffusionskanals, durch den Meßgas eindiffundieren kann, und der als Gasdiffusionswiderstand oder Diffusionsbarriere dient.

Aus der DE-OS 35 43 759 sowie den EP-A 0 142 992, 0 142 993, 0 188 900 und 0 194 082 sind ferner Sensorelemente und Detektoren bekannt, denen gemein ist, daß sie jeweils eine Pumpzelle und eine Sensorzelle aufweisen, die aus plättchen- oder folienförmigen sauerstoffleitenden Festelektrolyten und zwei hierauf angeordneten Elektroden bestehen und einen gemeinsamen Diffusionsspalt oder Diffusionskanal aufweisen.

Aus der DE-OS 37 28 618 ist es schließlich bekannt, in einem Sensorelement für polarographische Sonden zur Bestimmung des λ-Wertes von Gasgemischen mit einem auf O²-Ionen leitenden plättchen- oder folienförmigen Festelektrolyten angeordneten äußeren und inneren Pumpelektroden, von denen die innere Pumpelektrode auf dem plättchen- oder folienförmigen Festelektrolyten in einem Diffusionskanal für das Meßgas angeordnet ist, sowie mit Leiterbahnen für die Pumpelektroden, in dem Diffusionskanal auf der der inneren Pumpelektrode gegenüberliegenden Seite mindestens eine zweite innere Pumpelektrode anzuordnen, die mit der ersten inneren Pumpelektrode kurzgeschlossen ist.

Aus einem Vortrag von B.Y. Liaw und W. Weppner vom Max-Planck-Institut für Festkörperforschung in Stuttgart, gehalten anläßlich der "7th International Conference on Solid State Ionics", vom 5.-11.Nov.1989 in Hakone, Japan, ist eine Sauerstoff-Grenzstromsonde auf Basis von tetragonalem ZrO₂ bekannt geworden, bei der eine Kurzschlußzelle bzw. ein oxidischer Mischleiter vor einer inneren Pumpelektrode (Kathode) zur Grenzstrommessung angebracht ist. Die Autoren vertreten die Auffassung, daß die vorgeschaltete Kurzschlußzelle bzw. der oxidische Mischleiter zugleich eine Diffusionsbarriere darstellt, und sie erwarten, daß die Sauerstoff-Permeation den Diffusionsgesetzen gehorcht, infolgedessen linear vom äußeren Sauerstoffpartialdruck abhängt und so einen Grenzstrom an der nachgeschalteten Pumpzelle bewirkt. Tatsächlich ist dies aber nur dann der Fall, wenn Elektrodeneffekte (Polarisationen) der Kurzschlußzelle vernachlässigt werden können und keinen Einfluß auf die Sauerstoffpermeation ausüben. Anderenfals erhält man keinen linearen Zusammenhang zwischen Sauerstoffpartialdruck und Meßsignal (Pumpstrom).

Nachteile an den bekannten Sensorelementen für Sauerstoffgrenzstromsonden, insbesondere solchen, die durch Zusammenlaminieren mehrerer Festelektrolytfolien, insbesondere durch Zusammenlaminieren von Folien auf Basis von stabilisiertem ZrO₂ hergestellt werden, ist, daß sie mit zunehmender Pumpspannung eine CO₂- und H₂O-Querempfindlichkeit aufweisen. In diesem Fall wird nicht nur O₂ an der inneren Pumpelektrode (Kathode) umgesetzt, sondern auch CO₂ und H₂O. Der Meastrom ist dann erheblich größer und nicht mehr vom Sauerstoffpartialdruck linear abhängig.

### Vorteile der Erfindung

Das erfindungsgemäße Sensorelement mit den kennzeichnenden Merkmalen des Hauptanspruchs, das sich zur Bestimmung des λ-Wertes von Gasgemischen, insbesondere von Abgasen von Verbrennungsmotoren eignet, hat gegenüber den bisher bekannten planaren Sensorelementen wesentliche Vorteile.

Dadurch, daß die kathode des Sensorelements den zu messenden Sauerstoff nicht direkt sondern über eine vorgeschaltete Kurzschlußzelle erhält, kann bei Betrieb im Abgas von Verbrennungsmotoren eine Querempfindlichkeit gegenüber den anderen Abgaskomponenten CO₂ und H₂O , wie sie bei höheren Temperaturen und höheren Pumpspannungen auftritt, vermieden werden. Außerdem wird verhindert, daß sich Feststoffteilchen aus dem Abgas in der Diffusionsbarriere der Sonde festsetzen und so den Diffusionswiderstand verändern.

Gegenüber dem auf der "7th International Conference on Solid State "Ionics" vorgestelltem Sensorlement hat das erfindungsgemäße Sensorelement den Vorteil, daß durch die Anordnung einer separaten Diffusionsbarriere zwischen Pumpzelle und Kurzschlußzelle, die Kurzschlußzelle nicht die Funktion einer Diffusionsbarriere ausübt, sondern nur dafür sorgt, daß vor der eingebauten Diffusionsbarriere der gleiche Sauerstoffpartialdruck herrscht wie im Meßgas. Die Kurzschlußzelle beeinträchtigt daher die Sauerstoffzulieferung nicht.

Die Wirkungsweise eines erfindungsgemäßen Sensorelementes läßt sich wie folgt erklären:

Werden bei einer Sauerstoff-Konzentrationszelle O₂, Pt/ZrO₂/Pt, O₂ die beiden Pt-Elektroden kurzgeschlossen, so fließt so lange ein Kurzschlußstrom, bis der O₂-Partialdruck auf beiden Seiten gleich groß ist. Ist dabei der Gasraum zumindest auf einer Seite der Zelle begrenzt und relativ klein und sind die Polarisationen und ohmschen Widerstände, die den Kurzschlußstrom bestimmen, entsprechend niedrig, so kann dieser Ausgleich relativ schnell erfolgen. Auf diese Weise läßt sich bei einer Grenzstromsonde Sauerstoff aus dem Meßgas zur eigentlichen Meßzelle (Pumpzelle) transportieren, ohne daß störende oder schädliche Abgaskomponenten mit der Meßzelle in Berührung kommen. Wird nämlich vor die Diffusionsbarriere und Pumpzelle erfindungsgemäß eine Kurzschlußzelle geschaltet, so bewirkt der Kurzschluß, daß sich im Gasraum vor der Diffusionsbarriere der gleiche O₂-Partialdruck einstellt wie im Abgas.

Im Falle eines erfindungsgemäßen Sensorelementes erfolgt also die Sauerstoffversorgung der Pumpzelle über eine Kurzschlußzelle, die vor einer separaten Diffusionsbarriere angeordnet ist. Zwischen Kurzschluß- und Pumpzelle muß sich dabei eine ausreichend große Diffusionsbarriere befinden.

Gemäß einer ersten vorteilhaften Ausführungsform der Erfindung ist das Sensorelement derart ausgestaltet, daß die Anode der Pumpzelle im Meßgas liegt. Bei dieser Ausführungsform muß die Kurzschlußzelle den gesamten, durch den Meßstrom verbrauchten Sauerstoff nachliefern, der über die Anode wieder in das Meßgas zurückgeführt wird.

Gemäß einer zweiten vorteilhaften Ausführungsform der Erfindung ist das Sensorelement derart ausgestaltet, daß die Anode der Pumpzelle zusammen mit Diffusionsbarriere und Kathode im inneren Gasraum der Kurzschlußzelle liegt. In diesem Fall wird der Sauerstoff, der an der Anode der Pumpzelle entsteht und an der Kathode verbraucht wird, in einem Gaskreislauf über die Diffusionsbarriere geführt. Die Kurzschlußzelle greift in diesen Gaskreislauf nur regulierend ein, wenn sich der O₂-Partialdruck im Meßgas ändert. Sie muß also nur die Angleichung an den äußeren Sauerstoff-Partialdruck vornehmen und nicht den gesamten an der Kathode der Pumpzelle verbrauchten Sauerstoff nachliefern. Bei dieser zweiten Ausführungsform sind daher die Einstellzeiten im allgemeinen kürzer als bei der ersten Ausführungsform.

Vorzugsweise werden die erfindungsgemäßen Sensorelemente ausgehend von plättchen- oder folienförmigen keramischen Materialien hergestellt, die nach üblichen bekannten Methoden, z.B. der Siebdrucktechnik, bedruckt, zusammenlaminiert und gesintert werden, wobei sowohl die Kurzschlußzellen, wie auch die Pumpzellen in einfacher Weise durch Bedrucken eines der zur Herstellung von Sauerstoffgrenzstromsonden üblichen plättchen- oder folienförmigen Festelektrolyten mit einem Metall der Platingruppe erhalten werden können.

Die Diffusionsbarriere eines erfindungsgemäßen Sensorelementes besteht aus einer Zone oder einem Abschnitt aus einem grob porös versinterten und bis zu einem gewissen Grad gasdurchlässigen keramischen Material, z. B. auf Al₂O₃- oder ZrO₂-Basis, oder aus einem Diffusionsspalt oder Diffusionskanal, der gegebenenfalls teilweise mit grob versintertem keramischen Material gefüllt sein kann.

### Zeichnung

In der Zeichnung sind zwei vorteilhafte Ausführungsformen eines erfindungsgemäßen Sensorelementes beispielsweise und vereinfacht dargestellt.
- Fig. 1: einen schematischen Längsschnitt durch den vorderen Teil einer ersten Ausführungsform eines erfindungsgemäßen Sensorelementes und
- Fig. 2: einen schematischen Querschnitt durch eine zweite Ausführungsform eines erfindungsgemäßen Sensorelementes.

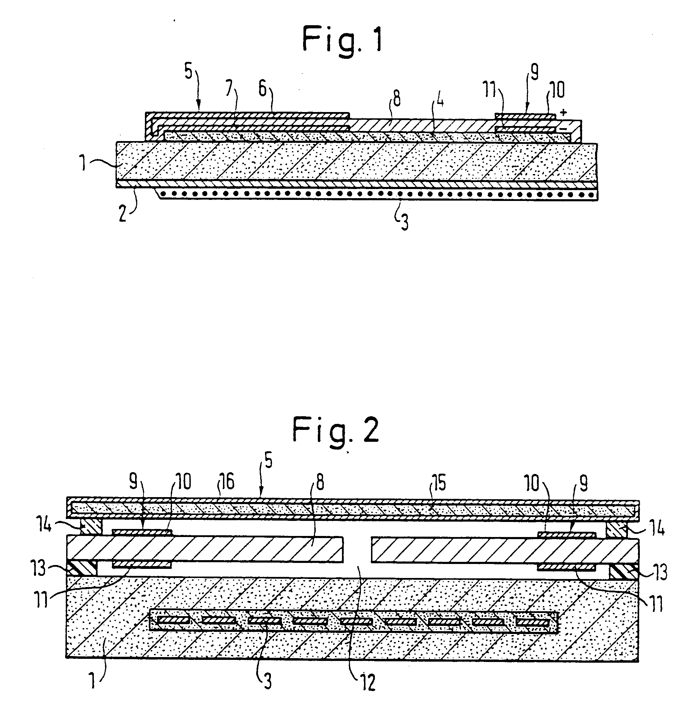

Die in Fig. 1 schematisch dargestellte erste Ausführungsform eines erfindungsgemäßen Sensorelementes besteht aus einem Träger oder Substrat 1 in Form eines Plättchens, auf dessen einer Seite eine Isolationsschicht 2 und ein Heizer 3 und auf dessen anderer Seite eine Diffusionsbarriere 4 sowie eine Kurzschlußzelle 5 aus Elektroden 6 und 7 sowie einer Festelektrolytschicht 8 und eine Pumpzelle 9 aus der Anode 10, der Kathode 11 sowie der Festelektrolytschicht 8 angeordnet sind.

Der Träger oder das Substrat 1 des erfindungsgemäßen Sensorelementes besteht aus einem Keramikmaterial, wie es üblicherweise zur Herstellung von Sensorelementen verwendet wird, beispielsweise auf ZrO₂- oder Al₂O₃-Basis. Als vorteilhaft hat es sich erwiesen, zur Herstellung des Sensorelementes Folien aus ungesintertem Keramikmaterial mit einer Schichtstärke von 0,3 bis 2,0 mm, insbesondere von etwa 0,6 bis 1,0 mm verwenden.

Die Isolationsschicht 2 besteht aus einer üblichen isolierenden Schicht, z. B. auf Al₂O₃-Basis. Sie kann beispielsweise 15 bis 20µm stark sein. Der Heizer 3 kann beispielsweise ein Heizer auf Pt/Al₂O₂-Basis sein, der durch Aufdrucken einer entsprechenden Cermetpaste erhalten werden kann.

Die Diffusionsbarriere 4 besteht aus einem grob porös sinternden keramischen Material, z. B. auf Al₂O₃-Basis oder ZrO₂-Basis, die durch Aufdrucken einer entsprechenden Paste oder Auflaminieren einer porös sinternden Folie erhalten werden kann. Ihre Schichtstärke liegt in vorteilhafter Weise bei etwa 20 bis 50 µm. Sie braucht nicht den ganzen Raum, wie in Fig. 1 dargestellt, auszufüllen. Es genügt, wenn Teile des Sauerstoff-Diffusionsweges zwischen Kurzschlußzellenanode und Pumpzellenkathode durch eine Barriere eingeengt werden.

Die Porosität der Diffusionsbarriere kann gegebenenfalls durch Zusatz von Porenbildnern variiert werden, die beim Sinterprozeß verbrennen, sich zersetzen oder verdampfen. Typische Porenbildner, die verwendet werden können, sind z. B. Thermalrußpulver, Graphit-Kohlenstoff, Kunststoffe, z. B. auf Polyurethanbasis, Salze, z. B. Ammoniumcarbonat und weitere organische Substanzen, wie z. B. Theobromin und Indanthrenblau. Derartige Porenbildner können dem porös sinternden Ausgangsmaterial in verschiedenen Mengen zugesetzt werden.

Die Elektroden der Kurzschlußzelle 5 wie auch der Pumpzelle 9 bestehen vorzugsweise aus einem Metall der Platingruppe, insbesondere Platin, oder aus Legierungen von Metallen der Platingruppe oder Legierungen von Metallen der Platingruppe mit anderen Metallen. Gegebenenfalls enthalten sie ein keramisches Stützgerüstmaterial, z. B. in Form eines YSZ-Pulvers, mit einem Volumenanteil von vorzugsweise etwa 40 Vol.-%. Sie sind porös und möglchst dünn. Vorzugsweise weisen sie eine Dicke von 8 bis 15µm auf. Die zu den Elektroden gehörenden Leiterbahnen bestehen vorzugsweise ebenfalls aus Platin oder einer Platinlegierung des beschriebenen Typs. Sie können ferner ebenfalls ausgehend von einer Paste auf Edelmetall-Cermetbasis erzeugt werden.

Die Festelektrolytschicht 8 besteht aus einem der bekannten, zur Herstellung von O²⁻-Ionen leitenden Festelektrolytfolien verwendeten Oxide vierwertiger Metalle, wie insbesondere ZrO₂, CeO₂, HfO₂ und ThO₂ mit einem Gehalt an zweiwertigen Erdalkalioxiden und/oder vorzugsweise dreiwertigen Oxiden der seltenen Erden. In typischer Weise kann die Schicht zu etwa 50 bis 97 Mol-% aus ZrO₂, CeO₂, HfO₂ oder ThO₂ und zu 50 bis 3 Mol-% aus CaO, MgO oder SrO und/oder Oxiden der seltenen Erden und insbesondere Y₂O₃ bestehen. In vorteilhafter Weise besteht die Schicht aus mit Y₂O₃ stabilisiertem ZrO₂. Die Dicke der Schicht kann in vorteilhafter Weise bei 10 - 200µm, insbesondere 15 bis 50µm liegen.

Im Falle dieser ersten Ausführungsform liegt die Anode 10 im Meßgas und die Kurschlußzelle liefert den gesamten, durch den Meßstrom verbrauchten Sauerstoff nach. Der Sauerstoff des Meßgases durchdringt somit die Elektrolytschicht 8 in Form von ionisiertem Sauerstoff, der an der zweiten Elektrode (Anode der Kurzschlußzelle) 7 wieder zu Sauerstoff (O₂) entwickelt wird. Dieser durchdringt die Diffusionsbarriere und wird von der Kathode 11 der Pumpzelle 9 abgepumpt und über die Pumpzellen-Anode 10 an das Meßgas abgegeben.

Im Falle der in Fig. 2 schematisch dargestellten zweiten vorteilhaften Ausführungsforn eines erfindungsgemäßen Sensorelementes ist die Anode 10 der Pumpzelle 9 im inneren Gasraum der Kurzschlußzelle 5 angeordnet.

Das Sensorelement besteht aus dem Träger oder Substrat 1 aus Keramikmaterial, z. B. ZrO₂-Keramik, mit einem in einer Isolationsschicht eingebettetem Heizer 3, dem Diffusionsspalt 12, der im Falle dieser zweiten Ausführungsform die Diffusionsbarriere bildet, der ringförmigen Pumpzelle 9 mit Anode 10 und Kathode 11 sowie der Festelektrolytschicht 8, dem Dichtrahmen 13, der Glasgarnierung 14 und der Kurzschlußzelle 5 aus einer Festelektrolytfolie oder einem Festelektrolytplättchen 15, z. B. aus ZrO₂-Keramik, die bzw. das rundum mit Elektroden 16 beschichtet ist.

Die Glasgarnierung 14, die den Abstand der Kurzschlußzelle 5 von der Pumpzelle 9 bestimmt, kann z. B. aus einem hochschmelzenden Glas bestehen und derart bemessen sein, daß der Abstand der Elektrode der Kurzschlußzelle 5, die der Pumpzelle 9 zugewandt ist, von der Anode 10 der Pumpzelle 9 etwa 20 bis 500 µm beträgt.

Das Element kann durch Bedrucken, Zusammenlaminieren und Sintern entsprechender Folien hergestellt werden, wobei der Diffusionsspalt beispielsweise durch Aufdrucken einer Beschichtungsmasse erzeugt werden kann, die bei Vorsinter- oder Sintertemperatur rückstandslos zersetzt, verdampft oder verbrannt wird. Gegebenenfalls kann der Diffusionsspalt 12 jedoch auch eine Füllung aus grob porös sinterndem keramischen Material, z. B. auf Al₂O₃- oder ZrO₂-Basis aufweisen. Bei diesem Verfahren werden Kurzschlußzelle 5 und Pumpzelle 9 mit Träger 1 getrennt gesintert und anschließend durch die Garnierung 14 verbunden.

Im Falle dieses Sensorelementes mit aufgarnierter Kurzschlußzelle 5 wird der Sauerstoff, der an der Anode 10 der Pumpzelle 9 entsteht und an der Kathode 11 verbraucht wird, in einem Gaskreislauf über die Diffusionsbarriere geführt und die Kurzschlußzelle greift in den Gaskreislauf nur regulierend ein, wenn sich der O₂-Partialdruck im Meßgas ändert.

Die Herstellung eines erfindungsgemäßen Sensorelementes kann maschinell im Mehrfachnutzen erfolgen. Die Elemente können in Gehäuse üblichen bekannten Typs eingesetzt und zur Bestimmung des λ-Wertes von Gasgemischen verwendet werden. Durch die vorgeschaltete Kurzschlußzelle wird dabei eine CO₂- und H₂O-Querempfindlichkeit, wie bei vergleichbaren Sensorelementen üblich, vermieden. Durch die vorgeschaltete Kurzschlußzelle wird außerdem verhindert, daß sich Feststoffteilchen aus dem Abgas in der Diffusionsbarriere der Sonde festsetzen und so den Diffusionswiderstand verändern.

## Patentansprüche

1. Sensorelement zur Bestimmung des λ-Wertes von Gasgemischen, mit einer Pumpzelle (9) als Meßzelle, sowie einer meßgasseitig der Pumpzelle vorgeschalteten Kurzschlußzelle (5), die den einzig möglichen Zugang des Meßgases zur Pumpzelle (9) darstellt, dadurch gekennzeichnet, daß zwischen der Kurzschlußzelle (5) und der Kathode (11) der Pumpzelle (9) eine Diffusionsbarriere (4; 12) angeordnet ist.

2. Sensorelement nach Anspruch 1, dadurch gekennzeichnet, daß es in Keramikfolientechnik hergestellt ist.

3. Sensorelement nach Anspruch 1 oder 2, dadurch gekennzeichnet, daß die Anode (10) der Pumpzelle (9) im Meßgas liegt.

4. Sensorelement nach einem der Ansprüche 1 bis 3, dadurch gekennzeichnet, daß die Anode (10) der Pumpzelle (9) im inneren Gasraum der Kurzschlußzelle (5) liegt.

5. Sensorelement nach Anspruch 2, gekennzeichnet durch einen plättchenförmigen Träger (1), der auf seiner einen Seite eine Isolationsschicht (2) und einen Heizer (3) aufweist und auf seiner anderen Seite eine Kurzschlußzelle (5) und eine Pumpzelle (9), die über eine separate Diffusionsbarriere (4) voneinander getrennt sind.

## Claims

1. Sensor element for determining the λ-value of gas mixtures, having a pump cell (9) as measuring cell, and also a short-circuit cell (5) which is inserted upstream of the pump cell, on the test gas sides, and which provides the only possible access of the test gas to the pump cell (9), characterised in that a diffusion barrier (4; 12) is arranged between the short-circuit cell (5) and the cathode (11) of the pump cell (9).

2. Sensor element according to Claim 1, characterised in that it is produced using ceramic-sheet technology.

3. Sensor element according to Claim 1 or 2, characterised in that the anode (10) of the pump cell (9) is situated in the test gas.

4. Sensor element according to one of Claims 1 to 3, characterised in that the anode (10) of the pump cell (9) is situated in the internal gas space of the short-circuit cell (5).

5. Sensor element according to Claim 2, characterised by a platelet-type support (1) which has, on its one side, an insulating layer (2) and a heater (3) and, on its other side, a short-circuit cell (5) and a pump cell (9) which are separated from one another by means of a separate diffusion barrier (4).

## Revendications

1. Elément capteur pour la détermination de la valeur λ de mélange de gaz avec une cellule de pompage (9) comme cellule de mesure, ainsi qu'avec une cellule de court-circuit (5) branchée en amont côté gaz mesuré de la cellule de pompage, et qui constitue le seul accès possible du gaz mesuré à la cellule de pompage (9), élément capteur caractérisé en ce qu'entre la cellule de court-circuit (5) et la cathode (11) de la cellule de pompage (9), est disposée une barrière de diffusion (4 ; 12).

2. Elément capteur selon la revendication 1, caractérisé en ce qu'il est réalisé selon la technique des lamelles de céramique.

3. Elément capteur selon la revendication 1 ou la revendication 2, caracterisé en ce que l'anode (10) de la cellule de pompage (9) est placée dans le gaz de mesure.

4. Elément capteur selon une des revendications 1 à 3, caractérisé en ce que l'anode (10) de la cellule de pompage (9) est placée dans la chambre de gaz interne de la cellule de court-circuit (5).

5. Elément capteur selon la revendication 2, caractérisé par un support en forme de plaquette (1), qui comporte sur un de ses côtés une couche d'isolation (2) et un fil chauffant (3) et sur son autre côté une cellule de court-circuit (5) et une cellule de pompage (9) qui sont séparées l'une de l'autre par l'intermédiaire d'une barrière séparée de diffusion (4).
